# EUROPEAN PATENT APPLICATION

(11) **EP 4 016 717 A1**
(43) Date of publication of application: **22.06.2022**
(21) Application number: 21209961.8
(22) Date of filing: 23.11.2021
(51) Int. Cl.: H01M 50/213, H01M 50/284, H01M 50/289, H01M 50/251

(54) **BATTERY UNIT AND POWER STORAGE SYSTEM INCLUDING THE BATTERY UNIT**

(30) Priority: 18.12.2020 JP 2020209854
(71) Applicant: FDK Corporation, Tokyo 108-8212 (JP)
(72) Inventor: YUMOTO, Mitsuru, Tokyo, 108-8212 (JP)
(74) Representative: Epping - Hermann - Fischer

(57) **Abstract**

Provided is a battery unit 10 including a housing 20, an internal plate 30 attached to an interior of the housing, to separate an interior of the housing into an upper space S1 and a lower space S2, a battery pack 40 attached to a lower surface 31 of the internal plate, and disposed in the lower space, and a fixing unit 60 for fixing the battery pack to the lower surface of the internal plate.

## Description

### BACKGROUND OF THE INVENTION

### Field of the Invention

The present invention relates to a battery unit, and a power storage system including the battery unit.

### Description of the Related Art

To provide sufficient output and capacity in a medium or large electric device, a battery pack configured by coupling a plurality of battery cells in series or in parallel is known. For example, Japanese Patent Laid-Open No. 2011-18640 describes a battery pack including a plurality of battery cells, a case housing the plurality of battery cells inside, and a first insulation structure and a second insulation structure each having a plate form made of an insulation material. The first insulation structure insulates an upper surface side of the battery pack, and the second insulation structure insulates a lower surface side of the battery pack.

In addition, such a battery pack as described in the aforementioned Patent Literature 1 may be disposed in a housing for protection from the external environment, for example, wind, rain or the like, to be used. In this case, the battery pack is fixed to a bottom wall part of the housing by use of a double-sided tape, held from opposite sides altogether by using a predetermined bracket, and attached to the housing. However, when the battery pack is fixed to the bottom wall part of the housing by using the double-sided tape, the battery pack might be positioned shifted from a predetermined position. In this case, the housing has a dimension determined in advance, and hence it might be difficult to dispose the bracket in the housing. In this case, there is concern that the battery pack needs to be attached to the housing again, and an operation of attaching the battery pack to the housing becomes inefficient.

### SUMMARY OF THE INVENTION

The present invention has been developed in view of such problems, and an object thereof is to provide a battery unit that achieves an efficient operation of attaching a battery pack to a housing, and a power storage system including the battery unit.

According to the present invention, provided is a battery unit including a housing, an internal plate attached to an interior of the housing, to separate the interior of the housing into an upper space and a lower space, a battery pack attached to a lower surface of the internal plate, and disposed in the lower space, and fixing means for fixing the battery pack to the lower surface of the internal plate.

In the battery unit according to one aspect of the present invention, the internal plate includes, in at least a part of the internal plate, a reinforcement part that reinforces the internal plate.

In the battery unit according to one aspect of the present invention, the reinforcement part includes a first reinforcement portion formed by bending upward at least a part of a rim of the internal plate.

In the battery unit according to one aspect of the present invention, the reinforcement part includes a second reinforcement portion formed by cutting and raising at least a part of an upper surface of the internal plate.

In the battery unit according to one aspect of the present invention, the fixing means is a screw.

According to the present invention, provided is a power storage system including the above battery unit, and a control circuit device that controls an operation of the battery pack, the control circuit device being fixed to an upper surface of the internal plate and disposed in the upper space.

According to a battery unit of the present invention, a battery pack is fixed to a lower surface of an internal plate that separates an interior of a housing into an upper space and a lower space by using fixing means, and is disposed in the lower space. Consequently, according to the battery unit of the present invention, attaching of the battery pack to the housing is completed by fixing the battery pack to the lower surface of the internal plate. Therefore, a bracket that is a separate member heretofore required when fixing the battery pack is not required, and the attaching of the battery pack to the internal plate is facilitated. In consequence, the battery unit that achieves an efficient operation of attaching the battery pack to the housing can be provided.

### BRIEF DESCRIPTION OF THE DRAWINGS

FIG. 1 is a perspective view showing a battery unit according to a first embodiment, and does not show a front side wall part and a ceiling wall part;
FIG. 2 is an exploded perspective view of the battery unit of FIG. 1;
FIG. 3 is a downward perspective view showing a battery pack in the battery unit of FIG. 1;
FIG. 4 is an upward perspective view showing the battery pack of FIG. 3;
FIG. 5 is a downward perspective view showing a combined state of the battery pack and an internal plate in the battery unit of FIG. 1;
FIG. 6 is a perspective view showing a power storage system including the battery unit of FIG. 1, and does not show a front side wall part and a ceiling wall part;
FIG. 7 is a perspective view showing a battery unit according to a second embodiment, and does not show a front side wall part and a ceiling wall part;
FIG. 8 is an exploded perspective view showing the battery unit of FIG. 7;
FIG. 9 is a perspective view showing a power storage system including the battery unit of FIG. 7, and does not show a front side wall part and a ceiling wall part;
FIG. 10 is a downward perspective view showing a modification of the battery pack of FIG. 3;
FIG. 11 is an upward perspective view showing a battery pack of FIG. 10;
FIG. 12 is an upward perspective view showing another modification of the battery pack of FIG. 3; and
FIG. 13 is an upward perspective view showing a modification of the battery pack of FIG. 10.

### DETAILED DESCRIPTION OF THE EMBODIMENTS

Hereinafter, description will be made as to embodiments embodying the present invention with reference to the drawings.

### <First Embodiment>

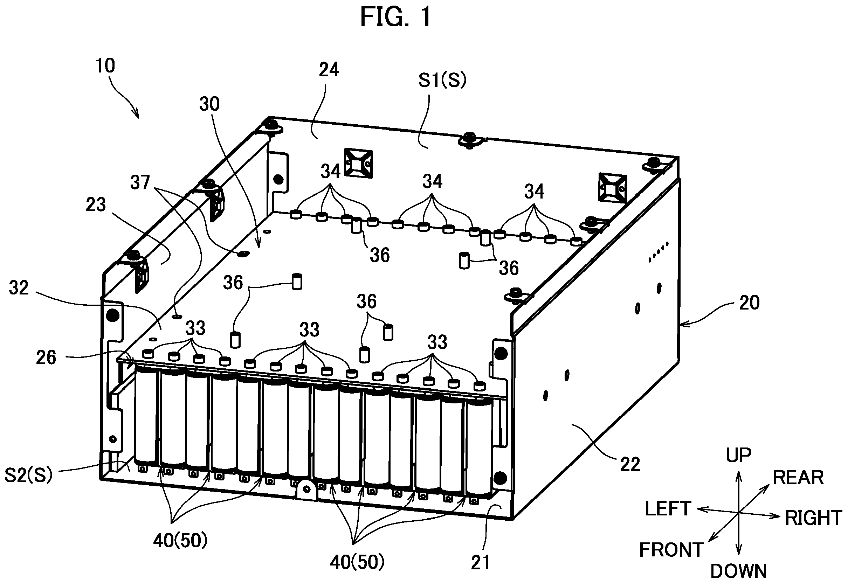

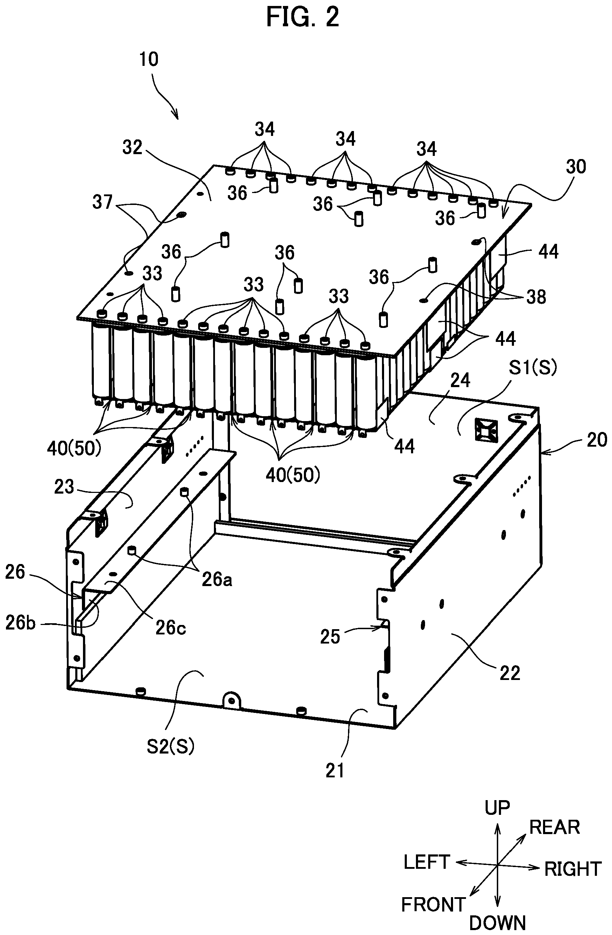

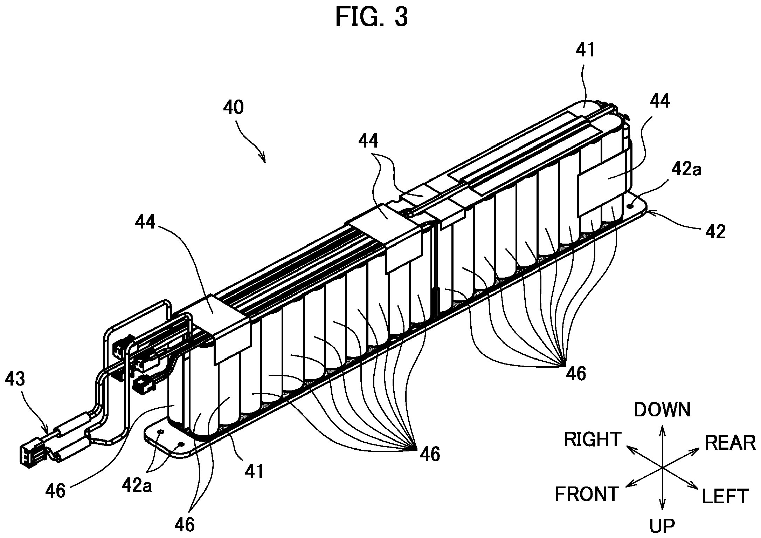

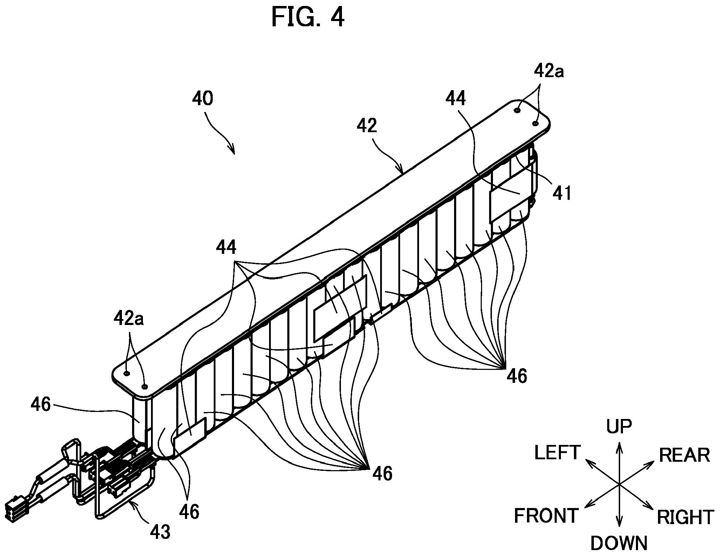

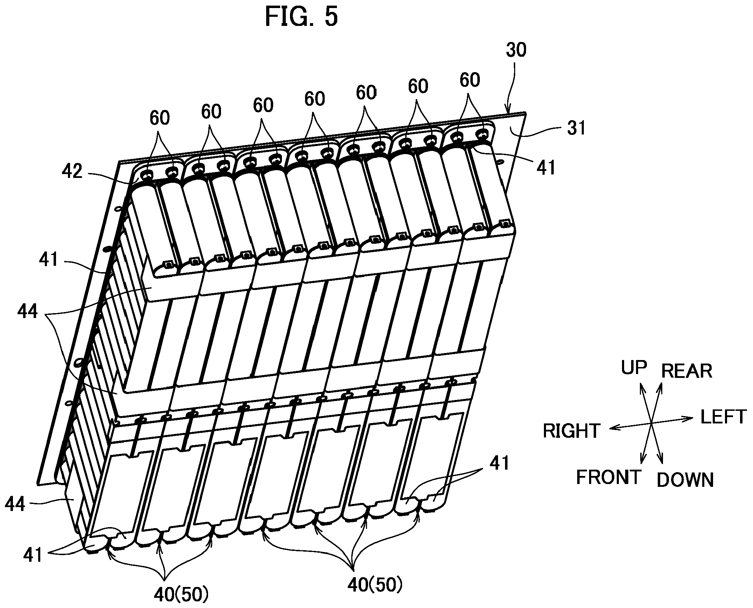

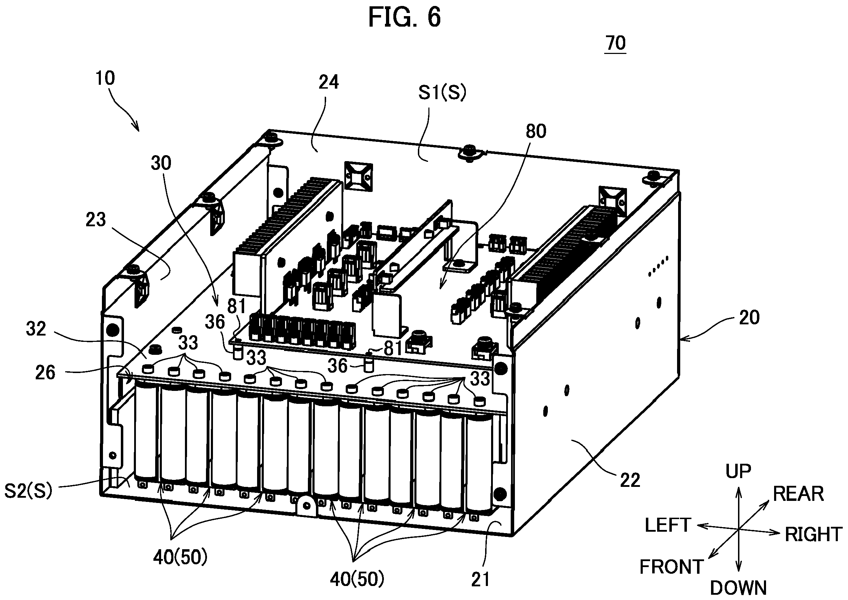

FIG. 1 is a perspective view showing a battery unit 10 according to a first embodiment, and does not show a front side wall part and a ceiling wall part. FIG. 2 is an exploded perspective view of the battery unit 10 of FIG. 1. FIG. 3 is a downward perspective view showing a battery pack 40 in the battery unit 10 of FIG. 1. FIG. 4 is an upward perspective view showing the battery pack 40 of FIG. 3. FIG. 5 is a downward perspective view showing a combined state of the battery pack 40 and an internal plate 30 in the battery unit 10 of FIG. 1. FIG. 6 is a perspective view showing a power storage system 70 including the battery unit 10 of FIG. 1, and does not show a front side wall part and a ceiling wall part.

For convenience of explanation, as shown in FIG. 1, in the battery unit 10, a side on which the battery pack 40 is disposed is defined as "down", and an opposite side is defined as "up". Also, as shown in FIG. 1, "left" and "right" are defined when viewed from a front surface of the battery unit 10. Furthermore, a direction perpendicular to an up-down direction and a right-left direction described above is defined as "front" and "rear". Hereinafter, "front", "rear", "left", "right", "up" and "down" shown in the respective drawings are all based on the above definition.

### <Battery Unit 10>

As shown in FIG. 1 to FIG. 5, the battery unit 10 includes a housing 20, the internal plate 30, the battery pack 40, and screws 60 as fixing means. The battery unit 10 is broadly used as a backup power source, and used in various use applications, for example, for railroad crossing signal, railroad and the like.

### <Housing 20>

As shown in FIG. 1 and FIG. 2, the housing 20 forms a substantially rectangular parallelepiped box as a whole, and is made of a metal material such as iron (SS400). An interior of the housing 20 is a housing space S housing the internal plate 30, the battery pack 40, a control board 80 (FIG. 6) as an after-mentioned control circuit device and the like. The housing 20 includes a bottom wall part 21 that is a rectangular flat plate member, side wall parts that are rectangular flat plate members extending upward from four sides of the bottom wall part 21, respectively (a right side wall part 22, a left side wall part 23, a rear side wall part 24, and a front side wall part (not shown)), and a ceiling wall part (not shown) that is a rectangular flat plate member facing the bottom wall part 21 and closing the housing space S from above. Respective edge portions of the bottom wall part 21, the side wall parts (the right side wall part 22, the left side wall part 23, the rear side wall part 24, and the front side wall part (not shown)), and the ceiling wall part (not shown) are fixed to one another by riveting, welding or the like. Consequently, the housing 20 forms the closed housing space S. In the housing 20, the bottom wall part 21, the side wall parts (the right side wall part 22, the left side wall part 23, the rear side wall part 24, and the front side wall part (not shown)) and the ceiling wall part (not shown) may have the same thickness or different thicknesses.

As shown in FIG. 2, a right mounting part 25 and a left mounting part 26 are fixed to the right side wall part 22 and the left side wall part 23, respectively. Note that the right mounting part 25 and the left mounting part 26 are formed mutually symmetrically when viewed from the front surface, and hence in the present embodiment the left mounting part 26 will be described, and the right mounting part 25 will not be described.

The left mounting part 26 includes a left vertical portion 26b that is a flat plate portion extending in a front-rear direction, and a left horizontal portion 26c that is a flat plate portion extending rightward from an upper edge of the left vertical portion 26b, and is made of, for example, iron (SS400). The left mounting part 26, in the left vertical portion 26b, is fixed to a center or a substantial center of the left side wall part 23 in the up-down direction, for example, by welding or the like. The left mounting part 26 includes, in the left horizontal portion 26c, two left spacers 26a arranged apart in the front-rear direction, and each of the left spacers 26a is fixed to the left horizontal portion 26c by welding or the like. The left spacer 26a is a hollow disc-like member opened upward, and is formed to protrude upward from the left horizontal portion 26c. The left spacer 26a has an inner surface in which an internal thread portion (not shown) is formed. In the present embodiment, a case where the number of the left spacers 26a is two is described, but the number of the left spacers 26a is not limited to this example.

### <Internal Plate 30>

As shown in FIG. 1, the internal plate 30 is attached to an interior of the housing 20, and separates the interior of the housing 20 into an upper space S1 and a lower space S2. As shown in FIG. 1 and FIG. 2, the internal plate 30 forms a rectangular shape as a whole, and is formed in a plate shape made of a metal material such as iron (SS400). The internal plate 30 includes a lower surface 31 (FIG. 5) that is a surface facing downward and an upper surface 32 that is a surface facing upward. In a state where the internal plate 30 is attached to the interior of the housing 20, the lower surface 31 of the internal plate 30 defines a part of the lower space S2 of the housing 20, and the upper surface 32 of the internal plate 30 defines a part of the upper space S1 of the housing 20.

As shown in FIG. 2, the internal plate 30 includes, in a left edge portion, two internal plate first through holes 37 arranged apart in the front-rear direction. Each internal plate first through hole 37 is a hole extending through the internal plate 30 in the up-down direction, and formed to correspond to the left spacer 26a of the left mounting part 26. Also, the internal plate 30 includes, in a right edge portion, two internal plate second through holes 38 arranged apart in the front-rear direction. Each internal plate second through hole 38 is a hole extending through the internal plate 30 in the up-down direction, and formed to correspond to a right spacer (not shown) of the right mounting part 25.

As shown in FIG. 1 and FIG. 2, the internal plate 30 includes, in a front edge portion of the internal plate 30, a plurality of front nuts 33 arranged in the right-left direction. Each front nut 33 is a hollow disc-like member opened downward, and disposed to protrude upward from the internal plate. The front nut 33 has an inner surface in which an internal thread portion (not shown) is formed. The front nut 33 is fixed to the front edge portion of the internal plate 30 by welding or the like to communicate with a through hole (not shown) extending through the internal plate 30 in the up-down direction.

Also, the internal plate 30 includes, in a rear edge portion of the internal plate 30, a plurality of rear nuts 34 arranged in the right-left direction. Each rear nut 34 is a hollow disc-like member opened downward, and disposed to protrude upward from the internal plate. The rear nut 34 has an inner surface in which an internal thread portion (not shown) is formed. The rear nut 34 is fixed to the rear edge portion of the internal plate 30 by welding or the like to communicate with a through hole (not shown) extending through the internal plate 30 in the up-down direction. In the present embodiment, a case where each of the number of the front nuts 33 and the number of the rear nuts 34 is 14 is described, but the number of the front nuts 33 and the number of the rear nuts 34 are not limited to this example.

Furthermore, upper spacers 36 that are hollow disc-like members opened upward are fixed to the upper surface 32 of the internal plate 30 by welding or the like. Each upper spacer 36 has an inner surface in which an internal thread portion (not shown) is formed. In the present embodiment, a case where the number of the upper spacers 36 is ten is described, but the number of the upper spacers 36 is not limited to this example.

### <Battery Pack 40>

As shown in FIG. 3 and FIG. 4, the battery pack 40 has a configuration where, for example, 20 battery cells 46 arranged in one row are aligned in two rows, and the respective battery cells 46 are resistance-welded in a predetermined terminal board. Specifically, the battery pack 40 includes insulating sheets 41 fixed to an upper side and a lower side on which electrodes of the respective battery cells 46 are located by use of a double-sided tape, and a fixing plate 42 made of a metal and fixed to the upper insulating sheet 41 by use of the double-sided tape. The fixing plate 42 extends beyond the battery cells 46 of the battery pack 40 in the front-rear direction, and in a front edge portion and a rear edge portion of the fixing plate 42, fixing through holes 42a extending through the fixing plate 42 in the up-down direction are formed. The fixing plate 42 is made of, for example, stainless steel or aluminum. Also, the battery pack 40 includes a power cable 43 connecting the battery pack 40 and external electrical equipment. The power cable 43 is fixed to the battery pack 40, for example, by use of a fixing tape 44. Note that the power cable 43 is shown only in FIG. 3 and FIG. 4, and is not shown in the other drawings such as FIG. 1 and FIG. 2 in consideration of ease of seeing the drawings. Note that a configuration and function of the battery pack including one bundle of the plurality of battery cells are known, and hence detailed description of the battery pack 40 will not be made.

As shown in FIG. 1 and FIG. 5, the battery pack 40 is attached to the lower surface 31 of the internal plate 30, and disposed in the lower space S2. Specifically, as shown in FIG. 5, the battery pack 40 is fixed to the lower surface 31 of the internal plate 30 with the screws 60. In a state where the internal plate 30 is attached to the housing 20, the battery pack 40 may be disposed to terminate in front of the bottom wall part 21 of the housing 20 that faces the lower surface 31 of the internal plate 30, or may be brought into contact with and disposed on the bottom wall part 21 of the housing 20. As shown in FIG. 1 and FIG. 2, in the present embodiment, seven battery packs 40 form one battery module 50. Note that the number of the battery packs 40 forming the battery module 50 is not limited to this example, and may be appropriately changed depending on a use form.

Each battery cell 46 forming the battery pack 40 includes, for example, a cylindrical hollow case, and an electrode assembly housed in the case. The electrode assembly is formed by superimposing a positive electrode plate, a negative electrode plate and a separator, each having a band shape, upon one another. In the electrode assembly, the separator is held between the positive electrode plate and the negative electrode plate. A predetermined amount of alkaline electrolyte (not shown) is poured into a case made of a metal. This alkaline electrolyte is impregnated into the electrode assembly, and proceeds with an electrochemical reaction (charge/discharge reaction) between the positive electrode plate and the negative electrode plate during the charging and discharging. It is preferable to use, as the alkaline electrolyte, aqueous solution containing, as solute, at least one of KOH, NaOH and LiOH. Note that a configuration itself of the battery cell is known, and hence detailed description of the battery cell 46 will not be made.

### <Power Storage System 70>

As shown in FIG. 6, the power storage system 70 includes the battery unit 10 described above, and the control board 80. The control board 80 is configured to control an operation of the battery pack 40, fixed to the upper surface 32 of the internal plate 30 and disposed in the upper space S1. The control board 80 includes a board through hole 81 formed to extend through the control board 80 in the up-down direction. The board through hole 81 is formed to correspond to the upper spacer 36 disposed in the internal plate 30. The control board 80 is electrically connected to the battery pack 40, and configured to control the charging and discharging of each battery cell 46.

Description will be made as to a method of assembling the battery unit 10 and the power storage system 70 according to the first embodiment. First, as shown in FIG. 5, the battery pack 40 is fixed to the internal plate 30. Specifically, the screws 60 are inserted into the fixing through holes 42a of the respective battery packs 40, the screws 60 are screwed into the front nuts 33 and the rear nuts 34 provided in the internal plate 30, and the respective battery packs 40 are accordingly fixed to the lower surface 31 of the internal plate 30.

Next, the internal plate 30 is attached to the housing 20. Specifically, screws (not shown) are inserted into the internal plate first through holes 37 and the internal plate second through holes 38 formed in the internal plate 30, the screws are screwed into the left spacer 26a of the left mounting part 26 and the right spacer (not shown) of the right mounting part 25, and the internal plate 30 is accordingly fixed to the housing 20. For example, the housing 20 may be assembled except the front side wall part and the ceiling wall part before the internal plate 30 is attached, and the front side wall part and the ceiling wall part may be attached to form the housing after the internal plate 30 is attached. Consequently, in a state where the battery pack 40 is fixed to the lower surface 31 of the internal plate 30, the battery pack is disposed in the lower space S2 of the housing 20. As described above, the assembling of the battery unit 10 is completed.

In a case of assembling the power storage system 70 according to the first embodiment, the control board 80 is attached to the internal plate 30 in a state where the battery unit 10 is assembled except at least the ceiling wall part. Specifically, screws (not shown) are inserted into respective board through holes 81 of the control board 80, the screws are screwed into the upper spacer 36 disposed in the internal plate 30, and the control board 80 is accordingly fixed to the upper surface 32 of the internal plate 30. Afterward, the ceiling wall part is attached, to complete the assembling of the power storage system 70.

Next, description will be made as to operations and effects of the battery unit 10 and the power storage system 70 according to the first embodiment. The battery packs 40 according to the present embodiment are fixed to the lower surface 31 of the internal plate 30 that separates the interior of the housing 20 into the upper space S1 and the lower space S2 by use of the screws 60, and are arranged in the lower space S2. Consequently, for the battery unit 10 and the power storage system 70, the attaching of the battery packs 40 is completed by fixing the battery packs 40 to the lower surface 31 of the internal plate 30 with the screws 60. Therefore, a bracket that is a separate member heretofore required when fixing the battery packs 40 is not required, and the fixing of the battery packs 40 to the internal plate 30 is facilitated. In consequence, the battery unit 10 and the power storage system 70 capable of achieving an efficient attaching operation of the battery packs 40 to the housing 20 can be provided. Also, the number of components in the battery unit 10 and the power storage system 70 can be reduced. Furthermore, the battery packs 40 are fixed to the lower surface 31 of the internal plate 30 with the screws 60, and the battery packs 40 can be thus stably fixed to the internal plate 30. Furthermore, the battery packs 40 can be removed from the internal plate 30 by removing the screws 60, so that maintenance and inspection of the battery unit 10 and the power storage system 70 can be easily performed.

### <Second Embodiment>

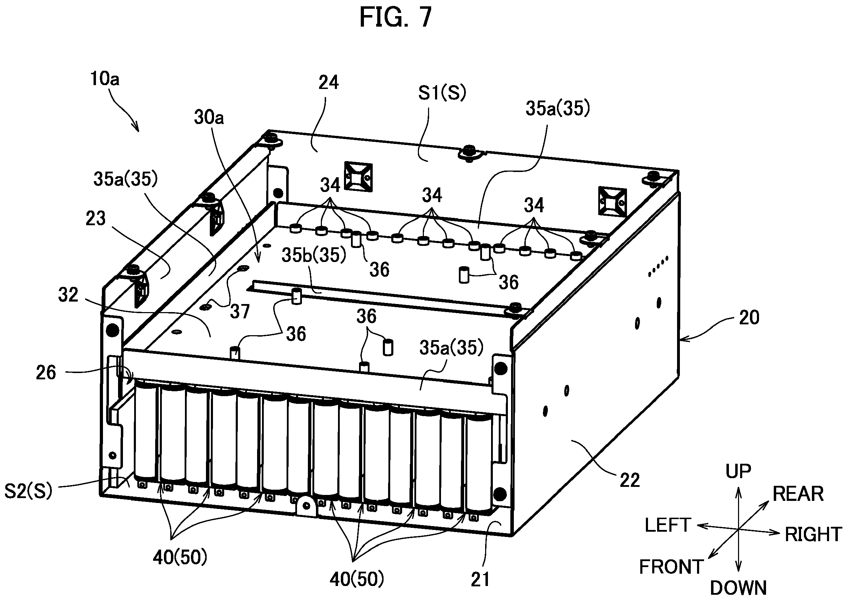

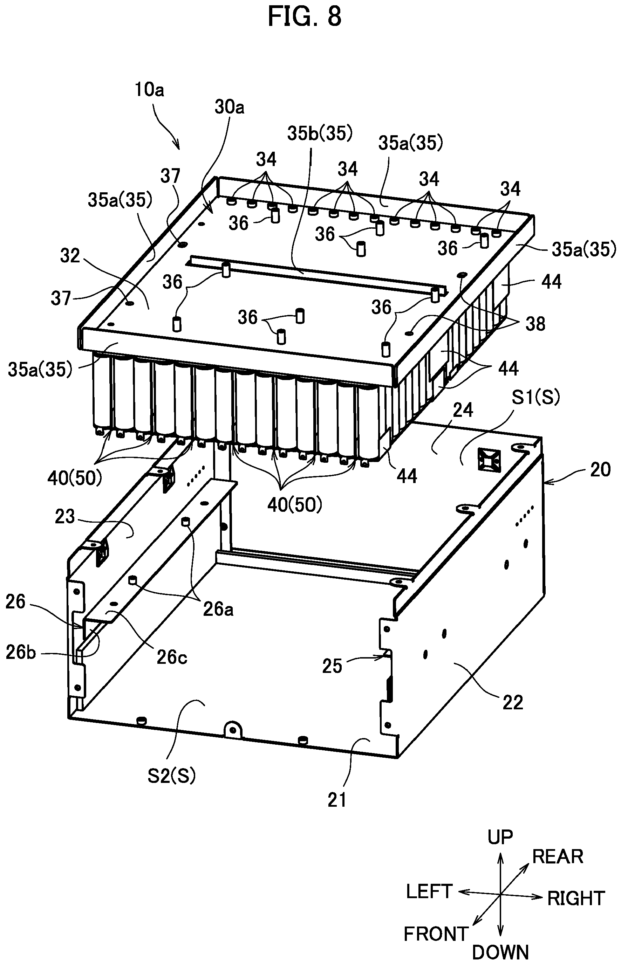

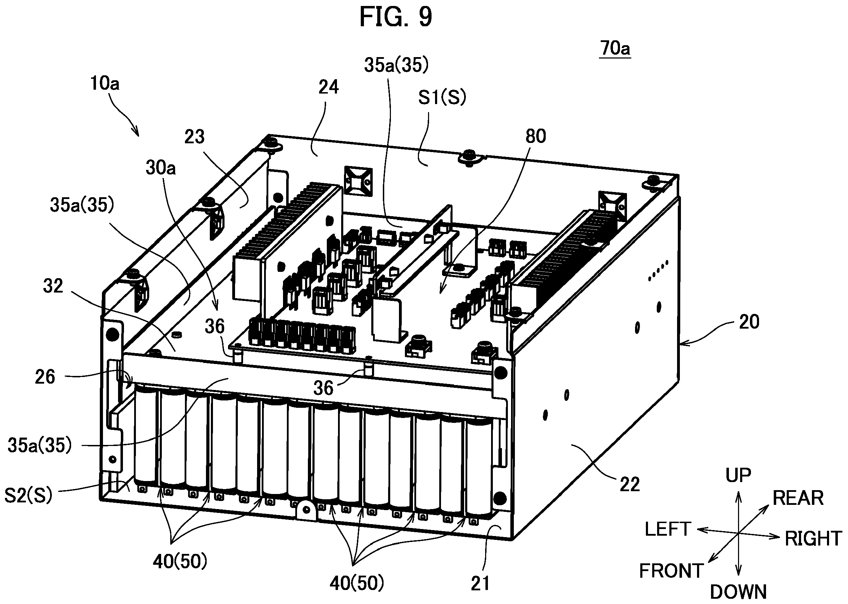

Next, description will be made as to a battery unit 10a and a power storage system 70a according to a second embodiment with reference to FIG. 7 to FIG. 9. FIG. 7 is a perspective view showing the battery unit 10a according to the second embodiment, and does not show a front side wall part and a ceiling wall part. FIG. 8 is an exploded perspective view showing the battery unit 10a of FIG. 7. FIG. 9 is a perspective view showing the power storage system 70a including the battery unit 10a of FIG. 7, and does not show a front side wall part and a ceiling wall part.

The battery unit 10a and the power storage system 70a according to the second embodiment are different from the battery unit 10 and the power storage system 70 according to the first embodiment in an after-mentioned configuration of an internal plate 30a. Hereinafter, a configuration having a function that is the same as or similar to that of the battery unit 10 according to the first embodiment is denoted with the same reference sign as in the battery unit 10, description thereof will not be made, and description will be made as to a different part.

### <Internal Plate 30a>

As shown in FIG. 7 and FIG. 8, the internal plate 30a includes, in at least a part of the internal plate 30a, a reinforcement part 35 that reinforces the internal plate 30a. Specifically, the reinforcement part 35 includes bent portions 35a (first reinforcement portions) each formed by bending upward at least a part of a rim of the internal plate 30a. The bent portions 35a are formed in all four sides of the internal plate 30a, respectively, and extend upward from an upper surface 32 of the internal plate 30a. As shown in FIG. 7 and FIG. 8, the respective bent portions 35a are formed with a predetermined gap between each other. Note that the number of the bent portions 35a is not limited to four, and may be appropriately changed depending on a use form.

As shown in FIG. 7 and FIG. 8, the reinforcement part 35 includes a cut-up portion 35b (second reinforcement portion) formed by cutting and raising at least a part of the upper surface 32 of the internal plate 30a. The cut-up portion 35b is formed in a rectangular or substantially rectangular shape by partially cutting out the internal plate 30a, and extends upward from the upper surface 32 of the internal plate 30a. One cut-up portion 35b extending in a right-left direction is disposed in a center or substantial center of the internal plate 30a in a front-rear direction. Note that the number and positions of cut-up portions 35b are not limited to this example, and may be appropriately changed depending on the use form. In the present embodiment, description is made as to a mode where the internal plate 30a includes both of the bent portion 35a and the cut-up portion 35b, but the internal plate 30a may include one of the bent portion 35a and the cut-up portion 35b.

As shown in FIG. 9, the power storage system 70a according to the second embodiment includes the battery unit 10a described above, and a control board 80. The control board 80 is configured to control an operation of a battery pack 40, fixed to the upper surface 32 of the internal plate 30a and disposed in an upper space S1.

Next, description will be made as to operations and effects of the battery unit 10a and the power storage system 70a according to the second embodiment. According to the battery unit 10a and the power storage system 70a of the second embodiment, the internal plate 30a includes, in at least a part of the internal plate 30a, the reinforcement part 35 that reinforces the internal plate 30a. Consequently, even in a state where the internal plate 30a is attached to an interior of a housing 20, downward deflection of the internal plate 30a due to a weight of the battery pack 40 can be inhibited.

Also, according to the battery unit 10a and the power storage system 70a of the second embodiment, the reinforcement part 35 includes the bent portion 35a formed by bending upward at least a part of the rim of the internal plate 30a. Consequently, the vicinity of the rim of the internal plate 30a can be reinforced, and the downward deflection of the internal plate 30a due to the weight of the battery pack 40 can be inhibited even in a state where the internal plate 30a is attached to the interior of the housing 20.

Further, according to the battery unit 10a of the second embodiment, the reinforcement part 35 includes the cut-up portion 35b formed by cutting and raising at least a part of the upper surface 32 of the internal plate 30a. Consequently, the internal plate 30a can be reinforced around the center of the plate, and the downward deflection of the internal plate 30a around the center due to the weight of the battery pack 40 can be inhibited even in a state where the internal plate 30a is attached to the interior of the housing 20.

### <Modification 1>

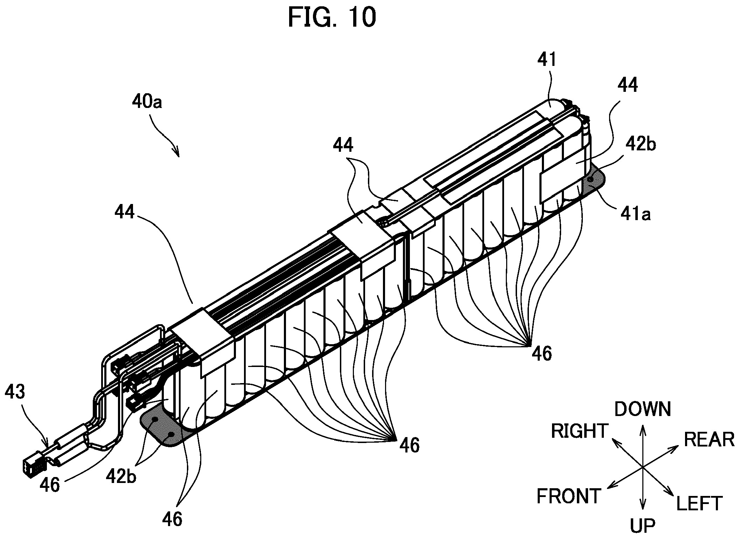

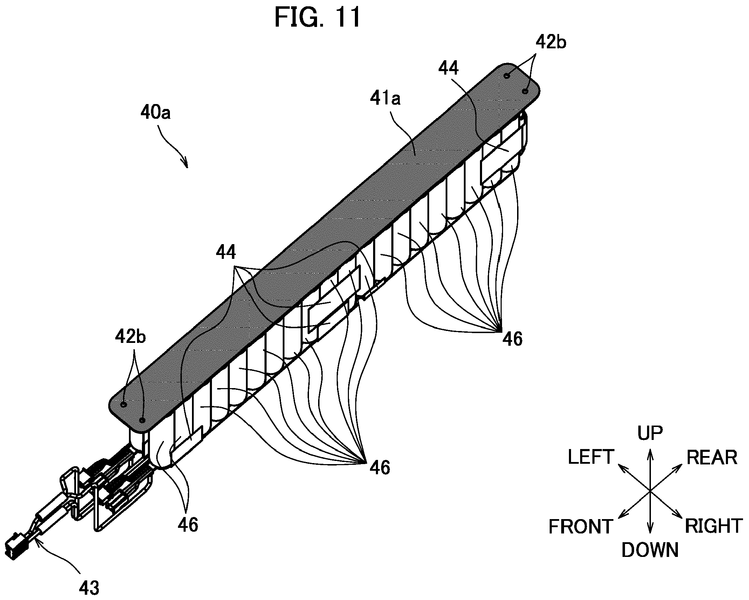

Next, description will be made as to a modification of the battery pack 40 according to the first embodiment with reference to FIG. 10 and FIG. 11. FIG. 10 is a downward perspective view showing the modification of the battery pack 40 of FIG. 3. FIG. 11 is an upward perspective view showing the battery pack 40 of FIG. 10. A battery pack 40a according to Modification 1 is different from the battery pack 40 according to the first embodiment in an after-mentioned configuration of an insulating sheet 41a. Hereinafter, a configuration having a function that is the same as or similar to that of the battery pack 40 according to the first embodiment is denoted with the same reference sign as in the battery pack 40, description thereof will not be made, and description will be made as to a different part.

As shown in FIG. 10 and FIG. 11, the battery pack 40a includes the insulating sheets 41a fixed to an upper side and a lower side on which electrodes of respective battery cells 46 are located by use of a double-sided tape. The insulating sheet 41a extends beyond the battery cells 46 of the battery pack 40a, and in a front edge portion and a rear edge portion of the insulating sheet 41a, fixing through holes 42b extending through the insulating sheet 41a in an up-down direction are formed. Then, each battery pack 40a is directly fixed to an internal plate 30 via the insulating sheet 41a. Specifically, screws 60 are inserted into the fixing through holes 42b of the insulating sheet 41a, the screws 60 are screwed into front nuts 33 and rear nuts 34 provided in the internal plate 30, and each battery pack 40a is accordingly fixed to a lower surface 31 of the internal plate 30.

### <Modification 2>

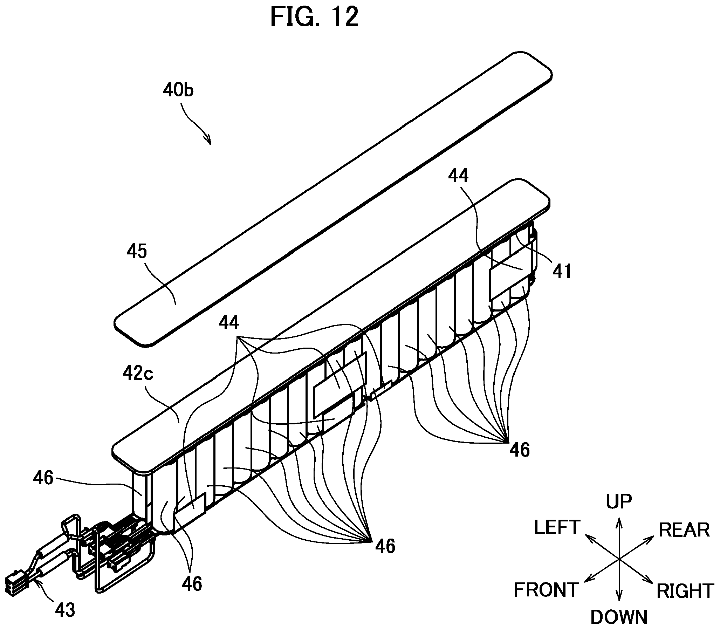

Next, description will be made as to another modification of the battery pack 40 according to the first embodiment with reference to FIG. 12. FIG. 12 is an upward perspective view showing the other modification of the battery pack 40 of FIG. 3. A battery pack 40b according to Modification 2 is different from the battery pack 40 according to the first embodiment in that an after-mentioned double-sided tape 45 is provided. Hereinafter, a configuration having a function that is the same as or similar to that of the battery pack 40 according to the first embodiment is denoted with the same reference sign as in the battery pack 40, description thereof will not be made, and description will be made as to a different part.

As shown in FIG. 12, the battery pack 40b includes insulating sheets 41 fixed to an upper side and a lower side on which electrodes of respective battery cells 46 are located by use of a double-sided tape, a fixing plate 42c made of a metal and fixed to the upper insulating sheet 41 by use of the double-sided tape, and a double-sided tape 45 attached to the fixing plate 42c. Then, each battery pack 40b is fixed to an internal plate 30 by attaching the double-sided tape 45 to a lower surface 31 of the internal plate 30.

### <Modification 3>

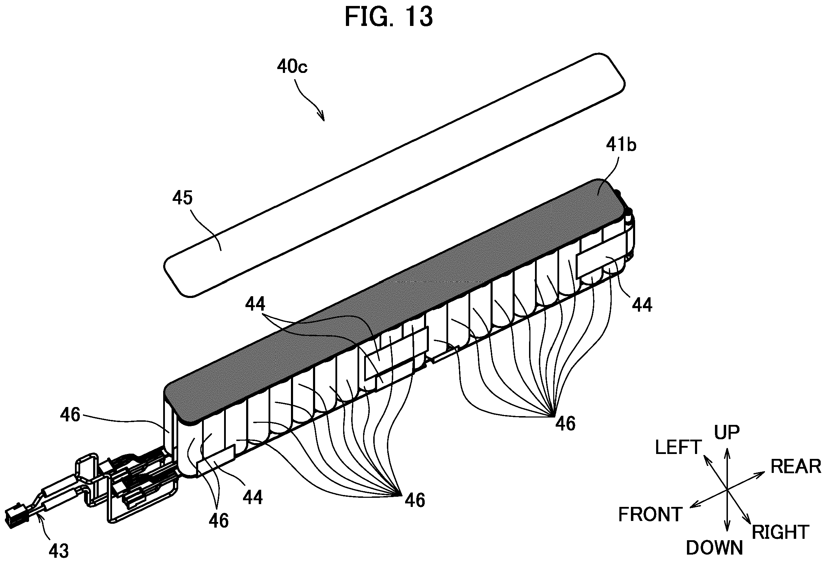

Next, description will be made as to a further modification of the battery pack 40a according to Modification 1 with reference to FIG. 13. FIG. 13 is an upward perspective view showing the modification of the battery pack 40a of FIG. 10. A battery pack 40c according to Modification 3 is different from the battery pack 40a according to Modification 1 in that an after-mentioned double-sided tape 45 is provided. Hereinafter, a configuration having a function that is the same as or similar to that of the battery pack 40a according to Modification 1 is denoted with the same reference sign as in the battery pack 40a, description thereof will not be made, and description will be made as to a different part.

As shown in FIG. 13, the battery pack 40c includes insulating sheets 41b fixed to an upper side and a lower side on which electrodes of respective battery cells 46 are located by use of a double-sided tape, and a double-sided tape 45 attached to each insulating sheet 41b. Respective insulating sheets 41b are arranged not to extend beyond the battery cells 46 of the battery pack 40c in a front-rear direction, and in a front edge portion and a rear edge portion of each insulating sheet 41b, fixing through holes extending through the insulating sheet 41b in an up-down direction are not formed. Then, respective battery packs 40c are fixed to an internal plate 30 by attaching the double-sided tape 45 to a lower surface 31 of the internal plate 30.

As above, the preferable embodiments of the present invention have been described, but the present invention is not limited to the battery units 10 and 10a according to the above embodiments, and includes any mode included in concept and claims of the present invention. Also, to exhibit the above-described problems or effects, the respective configurations may be appropriately and selectively combined. For example, a shape, material, arrangement, size or the like of each constituent component in the above embodiments may be appropriately changed in accordance with specific aspects of the present invention.

## Claims

1. A battery unit comprising:
a housing,
an internal plate attached to an interior of the housing, to separate the interior of the housing into an upper space and a lower space,
wherein further comprising
a battery pack attached to a lower surface of the internal plate, and disposed in the lower space, and
fixing means for fixing the battery pack to the lower surface of the internal plate.

2. The battery unit according to claim 1, wherein the internal plate includes, in at least a part of the internal plate, a reinforcement part that reinforces the internal plate.

3. The battery unit according to claim 2, wherein the reinforcement part includes a first reinforcement portion formed by bending upward at least a part of a rim of the internal plate.

4. The battery unit according to claim 2 or 3, wherein the reinforcement part includes a second reinforcement portion formed by cutting and raising upward at least a part of an upper surface of the internal plate.

5. The battery unit according to any one of claims 1 to 4, wherein the fixing means comprises a screw.

6. A power storage system comprising:
the battery unit according to any one of claims 1 to 4, and
a control circuit device that controls an operation of the battery pack, the control circuit device being fixed to the upper surface of the internal plate and disposed in the upper space.
